# EUROPÄISCHE PATENTSCHRIFT

(11) **EP 0 421 058 B1**
(45) Veröffentlichungstag und Bekanntmachung des Hinweises auf die Patenterteilung: **24.11.1993**
(21) Anmeldenummer: 90110643.5
(22) Anmeldetag: 05.06.1990
(51) Int. Cl.: F16B 2/02, F16B 2/06

(54) **Halteelement aus Kunststoff**
Supporting element of synthetic material
Elément de support en matière synthétique

(30) Priorität: 05.10.1989 DE 3933305
(43) Veröffentlichungstag der Anmeldung: 10.04.1991
(73) Patentinhaber: TRW United-Carr GmbH & Co. KG, D-67677 Enkenbach-Alsenborn (DE)
(72) Erfinder: Kraus, Willibald, D-6718 Grünstadt (DE); Hofmann, Jürgen, D-6719 Eisenberg (DE)
(74) Vertreter: Schieschke, Klaus, Dipl.-Ing.

(56) Entgegenhaltungen:
- EP-A- 0 157 283
- EP-A- 0 384 930
- FR-A- 2 222 887
- FR-A- 2 505 418
- FR-A- 2 535 009
- GB-A- 1 336 726
- GB-A- 2 187 255
- US-A- 3 213 500
- US-A- 3 776 092

## Beschreibung

Die Erfindung bezieht sich auf ein Halteelement aus Kunststoff, mit einem mindestens ein Teil halternden Haltebereich und einem mit einem Träger zu verbindenden Befestigungsbereich, wobei zwischen dem Befestigungsbereich und dem Träger mindestens ein den Seiten- und Winkelausgleich für den Haltebereich bewirkendes Zwischenelement angeordnet ist.

Als Stand der Technik ist bereits ein Halteelement bekannt (FR-A-2 535 009), wobei zwischen dem Befestigungsbereich und einem Träger ein Zwischenelement angeordnet ist. Hiermit ist es möglich, einen Winkelausgleich herzustellen, und zwar durch die Drehverbindung zwischen den einzelnen Teilen. Ein Seitenausgleich ist dadurch möglich, daß das Zwischenelement auf dem Träger seitlich verschoben werden kann.

Es handelt sich bei dieser bekannten Konstruktion um ein speziell ausgestaltetes Teil, wie es beispielsweise bei Stahlbewehrungen Anwendungen findet, bei welchem von vornherein zwei parallel verlaufende Teile vorliegen. Damit ergibt sich ein erheblich eingeschränkter Anwendungsbereich, wobei es außerdem nicht möglich ist, auch bezüglich der Höhe einen Toleranzausgleich vorzunehmen. Ein weiterer Nachteil besteht darin, daß ein Seitenausgleich dann nicht möglich ist, wenn die beiden entsprechenden Teile nicht parallel verlaufen.

Zum Stand der Technik zählt weiterhin ein Halteelement, bei welchem über eine Schraube zwei Spannarme gegeneinander verspannt werden und damit ein an der Rohrhalterung angeordnetes kegelstumpfartiges Teil von einem Zwischenelement umschlossen wird (GB-A-187 255). Hier ist nur ein Winkelausgleich möglich, so daß auch dieses bekannte Halteelement einen eingeschränkten Toleranzausgleich ermöglicht.

Weiterer Stand der Technik besteht darin, ein Halteelement beispielsweise zur Halterung von Rohren oder Kabeln so auszubilden, daß der Haltebereich des Rohres teilweise umfaßt und dann mit seinem Befestigungsbereich in eine Öffnung eines Trägers eingedrückt wird (US-A-3 776 092, US-A-3 213 500, FR-A-1 401 899). Diese Befestigungsart setzt voraus, daß die im Träger vorhandenen Öffnungen eine sehr enge Toleranz aufweisen, wenn beispielsweise auch die Zone des zu halternden Teils nur eine geringe Toleranzweite zuläßt. Bei größeren Toleranzen ist keine einwandfreie Verbindung zwischen dem zu halternden Teil und dem Träger mit diesen bekannten Konstruktionen möglich.

Demgegenüber liegt der vorliegenden Erfindung die Aufgabe zugrunde, ein Halteelement der eingangs genannten Art so zu gestalten, daß in jedem Fall unabhängig von der Befestigungsart ein Seitenausgleich und zugleich ein Höhenausgleich gegeben ist, wobei insgesamt eine einfach aufgebaute Konstruktion vorliegen soll.

Diese Aufgabe wird erfindungsgemäß dadurch gelöst, daß ein Zwischenelement zusätzlich einen Höhenausgleich besitzt, daß der Befestigungsbereich eine Eingriffszone aufweist, welche bei größerer Länge als die Breite des Zwischenelements stabartig ausgebildet und in einer Aussparung des Zwischenelements einlagerbar ist und daß die Aussparung des Zwischenelements die stabartige Eingriffszone federnd umfaßt.

Hierdurch ergibt sich der Vorteil eines erheblich verbesserten Toleranzausgleichs, und zwar sowohl in der Höhe als auch bezüglich der Seite und des Winkels.

Durch diese Dimensionierung in der Länge der Eingriffszone im Hinblick auf die Breite des Zwi- schenelements kann das Halteelement entsprechend Verschoben werden, so daß größere Toleranzen ausgeglichen werden können. Hierbei ist die Eingriffszone vorteilhafterweise stabartig ausgebildet und in eine Aussparung des Zwischenelements einlagerbar. Die Aussparung des Zwischenelements umfaßt hierbei die stabartige Eingriffszone federnd, so daß das Zwischenelement in die stabartige Eingriffszone eingeklippt werden kann. Der stabartige Bereich läßt sich in alternativer Ausführungsform hierbei auch durch mehrere Zwischenelemente in einzelne Abschnitte unterteilen, um bei Toleranzausgleich eine entsprechende Fixierung zu gewährleisten.

Nach einem anderen Merkmal der Erfindung kann die Eingriffszone in ihren Endbereichen durch Flansche begrenzt werden, so daß sichergestellt ist, daß in der Praxis nicht das Halteelement aus dem Zwischenelement herausgleitet.

Nach einem weiteren Merkmal der Erfindung können die stabartige Eingriffszone des Befestigungsbereichs und die Aussparung des Zwischenelements jeweils verzahnt ausgebildet sein; hierdurch besteht die Möglichkeit, das Halteelement vorteilhafterweise winkelverdrehbar an einem Träger anzuordnen, wobei durch die Verzahnung der Eingriffszone und der Aussparung stets ein sicherer Halt in der gewünschten Lage gewährleistet ist und Klappergeräusche vermieden werden.

Nach einem weiteren Merkmal der Erfindung kann das Zwischenelement über ein Profilelement, über federnde Verriegelungsarme oder über eine Ausnehmung mit dem Träger verbunden sein. Alter-. nativ besteht auch die Möglichkeit, daß das Zwischenelement einen Profilzapfen aufweist, welcher höhenverrastbar in einer Profilausnehmung eines zweiten, mit dem Träger verbindbaren Zwischenelements angeordnet ist. Hierdurch besteht die Möglichkeit, das Halteelement gegenüber dem Träger auch höhenverstellbar im gewünschten Sinne anzuordnen, so daß das Halteelement winkel-, höhen- und seitenverstellbar an dem Träger befestigt werden kann, wodurch sich insgesamt ein weiter Toleranzbereich ergibt, der durch die erfindungsgemäße Konstruktion erfaßt wird.

Sollen Rohre oder Kabel gehaltert werden, so kann der Haltebereich des Halteelements eine gewölbte Längsausnehmung aufweisen. Hierbei verläuft vorteilhafterweise die Längsausnehmung des Haltebereichs parallel zu der stabartigen Eingriffszone des Befestigungsbereichs. Um die Rohre oder Kabel funktionssicher an dem Halteelement zu haltern, besteht erfindungsgemäß in weiterer Ausgestaltung die Möglichkeit, daß im Abstand zu den die Begrenzung der Eingriffszone bildenden Flanschen jeweils ein weiterer Flansch in der Eingriffszone angeordnet ist. Hierbei liegen die Flansche unterhalb der gewölbten Längsausnehmung des Haltebereichs, so daß beispielsweise durch Bandelemente die zu halternden Rohre oder Kabel funktionssicher in dem Zwischenbereich zwischen den Flanschen befestigt werden können. Nach dieser Befestigung läßt sich dann die vormontierte Einheit in der gewünschten Trägeröffnung anbringen, wobei durch die besondere Gestaltung des erfindungsgemäßen Halteelements, wie vorstehend ausgeführt, ein sehr weiter Toleranzbereich abgedeckt wird.

Die Erfindung wird nachfolgend anhand von in der Zeichnung dargestellten Ausführungsbeispielen näher beschrieben. In der Zeichnung zeigen:
- Fig. 1: eine perspektivische schematische Ansicht eines Halteelements
- Fig. 2: eine Ausführungsmöglichkeit des erfindungsgemäßen Halteelements in perspektivischer Ansicht, mit verschiedenen Anordnungsmöglichkeiten a bis d an einem Träger;
- Fig. 3-5: weitere Ausführungsmöglichkeiten des Halteelements in perspektivischer Ansicht;

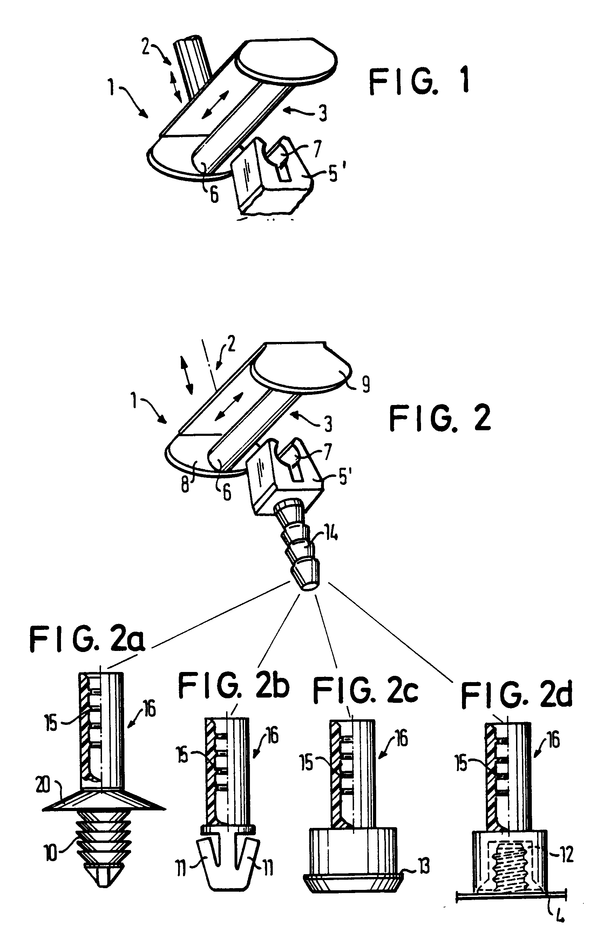

Nach Fig. 1 weist ein Halteelement aus Kunststoff einen Haltebe- reich 2 auf, beispielsweise einen Bolzen oder Zapfen und einen mit einem Träger 4 zu verbindenden Be- festigungsbereich 3. Dieser Befestigungsbereich 3 weist eine stabartig ausgebildete Eingriffszone 6 auf.

Zwischen dem Träger 4 und dem Befestigungsbereich 3, d.h., der stabartigen Eingriffszone 6, ist ein Zwischenelement 5' geschaltet, welches eine auf die stabartige Eingriffszone 6 abgestellte Aussparung 7 aufweist. Die Aussparung 7 wird hierbei von zwei Schenkeln begrenzt, welche die stabartige Eingriffszone 6 federnd umfassen.

Der Befestigungsbereich 3, d.h., die stabartige Eingriffszone 6, weist eine Länge auf, welche größer als die Breite des Zwischenelements 5 ist. Damit besteht die Möglichkeit, daß das erfindungsgemäße Halteelement in Pfeilrichtung verschoben werden kann, so daß ein Toleranzausgleich in Seitenrichtung gegeben ist.

In nicht näher dargestellter Ausführungsmöglichkeit kann auch die stabartige Eingriffszone 6 durch mehrere Zwischenelemente in einzelne Abschnitte unterteilt werden, wodurch ebenfalls ein entsprechender Toleranzausgleich und eine entsprechende Fixierung gewährleistet sind.

Durch die in Fig. 1 dargestellte Bauform ist zunächst ein Seitenausgleich durch die Länge der stabartigen Eingriffszone 6 gewährleistet. Es besteht auch die Möglichkeit einen Höhenausgleich des Halteelements vorzusehen. weist Hierzü z.B. das Zwischenelement 5' nach Fig. 2 einen Profilbolzen 14 auf, welcher in eine entsprechende Profilausnehmung 15 eines weiteren zweiten Zwischenelements 16 einlagerbar ist.

Dieses zweite zwischen 16 weist entweder eine Profilelement 10, federnde Zungen 11, einen Rastring 13 oder eine Ausnehmung 12 auf.

Je nachdem, wie sich der Profilbolzen 14 in der Profilausnehmung 15 des zweiten Zwishenelements 16 einlagert, kann das Halteelement 1 nicht nur seiten-, sondern auch höhenverstellbar in einer Öffnung eines Trägers 4 angeordnet werden. Diese beiden Richtungen sind in Fig. 1 durch die Pfeile im Bereich des Halteelements 1 dargestellt.

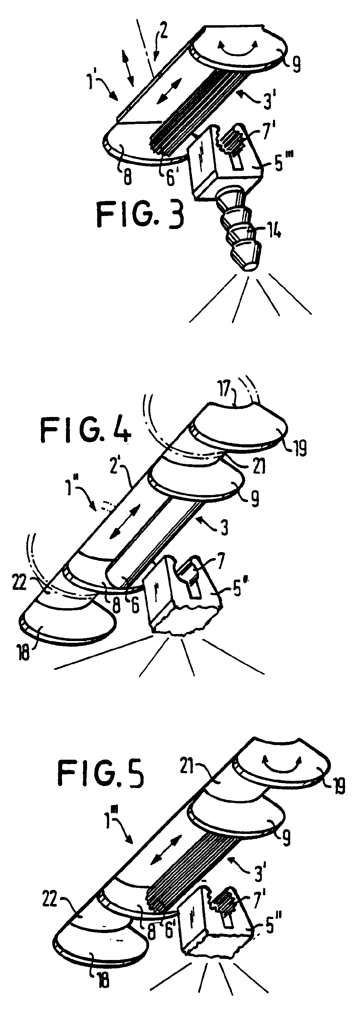

Nach Fig. 3 besteht die Möglichkeit, daß die stabartige Eingriffszone 6', welche den Befestigungsbereich 3' bildet, zahnartig ausgebildet ist, bzw. mindestens einen Zahn aufweist.. Entsprechend ist auch die Ausnehmung 7' des Zwischenelements 5''' zahnartig ausgebildet. Damit läßt sich das Halteelement 1' zum Toleranzausgleich zunächst seitlich verstellen, wobei außerdem gemäß dem weiteren Pfeil eine Winkelverstellbarkeit durch das Zusammenwirken der verzahnten Eingriffszone 6' und der verzahnten Ausnehmung 7' gegeben ist.

Darüber hinaüs besteht auch die Möglichkeit, analog der Ausführungsform nach Fig. 2 das Zwischenelement 5''' mit einem Profilbolzen 14 zu versehen, welcher analog der Befestigungsmöglichkeiten 1a, b, c und d über ein Zwischenelement 16 an einem Träger 4 befestigt werden kann. Hier ist ein Toleranzausgleich in Seitenrichtung, in Winkellage und in Höhenlage gegeben, wie durch Pfeile dargestellt.

Allen vorgenannten Ausführungsformen ist gemeinsam, daß die Eingriffszone 6 bzw. 6' in ihren Endbereichen durch Flansche 8 bzw. 9 begrenzt ist. Damit wird gewährleistet, daß die Ausnehmung 7 bzw. 7' des Zwischenelements einen Anschlag erfährt, wenn die entsprechenden Stirnflächen des Zwischenelements an den Innenseiten der Flansche 8 bzw. 9 anliegen.

Das erfindungsgemäße Halteelement ist vorteilhaft anwendbar zur Halterung von Rohren oder Flanschen. In diesem Fall weist das Halteelement 1'' nach Fig. 4 im Haltebereich 2' eine gewölbte Längsausnehmung 17 auf, in welcher Rohre bzw. Kabel gelagert werden können. Um diese Rohre bzw. Kabel zu haltern, werden sie in den Bereichen 21 und 22 von nicht näher dargestellten Bandelementen umschlungen und so an dem Halteelement 1'' befestigt.

Hierbei sind die Bereiche 21 und 22 durch die vorgenannten Flansche 8 und 9 und durch weitere Flansche 18 und 19 begrenzt. Die Flansche 8 und 9 besitzen hierbei eine Doppelfunktion, nämlich einmal die Begrenzung der Längsverschiebung des Zwischenelements 5 und zum anderen die Begrenzung der nicht näher dargestellten Bandteile in den Bereichen 21 und 22.

Nachdem nicht näher dargestellte Rohre oder Kabel über die Bandelemente in dem Bereich 21 und 22 befestigt sind, läßt sich die so vormontierte Einheit mit dem Halteelement 1'' in das Zwischenelement 5' einklippen, welches seinerseits bereits in einer entsprechenden Öffnung eines Trägers befestigt ist.

Bei der Ausführungsform nach Fig. 5 kann die stabartige Eingriffszone 6' wiederum eine Verzahnung aufweisen, welche mit einer entsprechenden Gegenverzahnung der Ausnehmung 7' des Zwischenelements 5'' zusammenwirkt. Hierdurch ist, analog der Ausführungsform nach Fig. 3, ein Toleranzausgleich in seitlicher Hinsicht und in Winkellage gemäß den Pfeilen gegeben.

Soll nun eine Höhenverstellung bewirkt werden, so besteht analog der Ausführungsform nach Fig. 2 die Möglichkeit, das Zwischenelement 5' bzw 5'' mit einem Profilzapfen 14 analog Zwischenelement 5''' zu versehen, welcher analog der Ausführungsform nach Fig. 2a bis d über ein Zwischenelement 16 an einem Träger zu befestigen ist. Damit kann das entsprechende Halteelement 1'' bzw 1''' in seitlicher Hinsicht, in Winkellage und bezüglich der Höhe an einem Fixpunkt eines Trägers, d.h., einer entsprechenden Öffnung des Trägers 4, befestigt werden.

Durch die Erfindung besteht die Möglichkeit, im Haltebereich 2 bzw. 2' eines Halteelements 1, 1', 1'', 1''' entsprechende Teile auch dann funktionssicher in einer Öffnung eines Trägers zu befestigten, wenn große Toleranzen vorliegen, welche ausgeglichen werden müssen. Es liegt damit auf einfache Weise ein Toleranzausgleich in Höhen-, in Winkel- und in Seitenrichtung vor.

## Patentansprüche

1. Halteelement aus Kunststoff, mit einem, mindestens ein Teil halternden Haltebereich und einem mit einem Träger zu verbindenden Befestigungsbereich, wobei zwischen dem Befestigungsbereich und dem Träger mindestens ein den Seiten- und Winkelausgleich für den Haltebereich bewirkendes Zwischenelement angeordnet ist,
dadurch gekennzeichnet,
daß das Zwischenelement (5', 5'', 5''') zusätzlich einen Höhenausgleich besitzt,
daß der Befestigungsbereich (3, 3') eine Eingriffszone (6, 6') aufweist, welche bei größerer Länge als die Breite des Zwischenelementes stabartig ausgebildet und in einer Aussparung (7, 7') des Zwischenelements (5', 5'', 5''') einlagerbar ist, und
daß die Aussparung (7, 7') des Zwischenelements die stabartige Eingriffszone (6, 6') federnd umfaßt.

2. Halteelement nach Anspruch 1,
dadurch gekennzeichnet,
daß der stabartige Bereich der Eingriffszone durch mehrere Zwischenelemente in einzelne Abschnitte zur Aufnahme des Zwischenelements unterteilt ist.

3. Halteelement nach einem der vorhergehenden Ansprüche,
dadurch gekennzeichnet,
daß die Eingriffszone (6, 6') in ihren Endbereichen durch Flansche (8, 9) begrenzt ist.

4. Halteelement nach einem der vorhergehenden Ansprüche,
dadurch gekennzeichnet,
daß die stabartige Eingriffszone (6') des Befestigungsbereichs (3') und die Aussparung (7') des Zwischenelements (5'', 5''') jeweils verzahnt ausgebildet sind.

5. Halteelement nach einem der Ansprüche 1 bis 4,
dadurch gekennzeichnet,
daß das Zwischenelement (5', 5'', 5''') einen Profilzapfen (14) aufweist, welcher höhenverrastbar in einer Profilausnehmung (15) eines zweiten, mit dem Träger (4) verbindbaren Zwischenelements (16) angeordnet ist.

6. Halteelement nach einem der vorhergehenden Ansprüche,
dadurch gekennzeichnet,
daß der Haltebereich (2') eine gewölbte Längsausnehmung (17) zur Lagerung von Rohren oder Kabeln aufweist.

7. Halteelement nach Anspruch 1 und 6,
dadurch gekennzeichnet,
daß die Längsausnehmung (17) des Haltebereichs (2') parallel zu der stabartigen Eingriffszone (6, 6') des Befestigungsbereichs (3, 3') verläuft.

8. Halteelement nach Anspruch 3 und 7,
dadurch gekennzeichnet,
daß im Abstand zu den die Begrenzung der Eingriffszone (6, 6') bildenden Flanschen (8, 9) ein weiterer Flansch (18, 19) in der Eingriffszone (6, 6') angeordnet ist.

9. Halteelement nach den Ansprüchen 6 bis 8,
dadurch gekennzeichnet,
daß die Flansche (8, 9, 18, 19) unterhalb der gewölbten Längsausnehmung (17) des Haltebereichs (2) angeordnet sind.

## Claims

1. Plastic holding element having a holding region holding at least one part and a fastening region to be connected to a support, at least one intermediate element effecting the lateral and angular compensation for the holding region being arranged between the fastening region and the support, characterised in that the intermediate element (5', 5'', 5''') additionally possesses a vertical compensation, in that the fastening region (3, 3') has an engagement zone (6, 6') which, in the case that the length is greater than the width of the intermediate element, is designed as a rod and can be inserted in a recess (7, 7') in the intermediate element (5', 5'', 5''') and in that the recess (7, 7') of the intermediate element encloses resiliently the rod-like engagement zone (6, 6').

2. Holding element according to Claim 1, characterised in that the rod-like region of the engagement zone is subdivided by a plurality of intermediate elements into individual sections for receiving the intermediate element.

3. Holding element according to one of the preceding claims, characterised in that the engagement zone (6, 6') is delimited at its end regions by flanges (8, 9).

4. Holding element according to one of the preceding claims, characterised in that the rod-like engagement zone (6') of the fastening region (3') and the recess (7') of the intermediate element (5'', 5''') are each designed so as to be toothed.

5. Holding element according to one of Claims 1 to 4, characterised in that the intermediate element (5', 5'', 5''') has a profile pin (14) which is arranged vertically lockable in a profile recess (15) of a second intermediate element (16) which can be connected to the support (4).

6. Holding element according to one of the preceding claims, characterised in that the holding region (2') has a curved longitudinal recess (17) for mounting pipes or cables.

7. Holding element according to Claims 1 and 6, characterised in that the longitudinal recess (17) of the holding region (2') extends parallel to the rod-like engagement zone (6, 6') of the fastening region (3, 3').

8. Holding element according to Claims 3 and 7, characterised in that, at a distance from the flanges (8, 9) forming the delimitation of the engagement zone (6, 6'), a further flange (18, 19) is arranged in the engagement zone (6, 6').

9. Holding element according to Claims 6 to 8, characterised in that the flanges (8, 9, 18, 19) are arranged below the curved longitudinal recess (17) of the holding region (2).

## Revendications

1. Elément de support en matière synthétique, comprenant une région de support supportant au moins une pièce et une région de fixation pouvant être reliée à un support, un élément intermédiaire au moins qui détermine une compensation latérale et angulaire pour la région de fixation étant disposé entre la région de fixation et le support,
caractérisé en ce que
l'élément intermédiaire (5', 5'', 5''') présente en outre une possibilité de compensation en hauteur,
la région de fixation (3, 3') comprend une zone d'engagement (6, 6') constituée en forme de tige dont la longueur est supérieure à la largeur de l'élément intermédiaire et qui peut être introduite dans un évidement (7, 7') de l'élément intermédiaire (5', 5'', 5'''), et
l'évidement (7, 7') de l'élément intermédiaire entoure élastiquement la zone d'engagement en forme de tige (6, 6').

2. Elément de support selon la revendication 1, caractérisé en ce que la région en forme de tige de la zone d'engagement est subdivisée en sections individuelles par plusieurs éléments intermédiaires pour la réception de l'élément intermédiaire.

3. Elément de support selon l'une quelconque des revendications précédentes, caractérisé en ce que la zone d'engagement (6, 6') est limitée dans ses régions d'extrémité par des brides (8, 9).

4. Elément de support selon l'une quelconque des revendications précédentes, caractérisé en ce que la zone d'engagement en forme de tige (6') de la région de fixation (3') et l'évidement (7') de l'élément intermédiaire (5'', 5''') sont respectivement de constitution dentée.

5. Elément de support selon l'une quelconque des revendications 1 à 4, caractérisé en ce que l'élément intermédiaire (5', 5'', 5''') comprend un tourillon profilé (14) qui peut être enclenché en hauteur dans un évidement profilé (15) d'un second élément intermédiaire (16) pouvant être relié au support (4).

6. Elément de support selon l'une quelconque des revendications précédentes, caractérisé en ce que la région de support (2') comprend un évidement longitudinal Incurvé (17) pour y disposer des tubes ou des câbles.

7. Elément de support selon les revendications 1 et 6, caractérisé en ce que l'évidement longitudinal (17) de la région de support (2') est parallèle à la zone d'engagement en forme de tige (6, 6') de la région de fixation (3, 3').

8. Elément de support selon les revendications 3 et 7, caractérisé en ce qu'une autre bride (18, 19) constituant la limite de la zone d'engagement (6, 6') est disposée dans la zone d'engagement (6, 6') à distance des brides (8, 9).

9. Elément de support selon les revendications 6 à 8, caractérisé en ce que les brides (8, 9, 18, 19) sont disposées au-dessous de l'évidement longitudinal incurvé (17) de la région de support (2).
